# EUROPEAN PATENT APPLICATION

(11) **EP 2 688 035 A1**
(43) Date of publication of application: **22.01.2014**
(21) Application number: 13168499.5
(22) Date of filing: 21.05.2013
(51) Int. Cl.: G06Q 50/04, G05B 19/418, G06Q 10/06

(54) **Apparatus for a plurality of clients to access a plant asset manager**

(30) Priority: 20.07.2012 US 201213553867
(71) Applicant: Yokogawa Electric Corporation, Tokyo 180-8750 (JP)
(72) Inventor: Ong, Raymond Aldwin, Tokyo, 180-8750 (JP)
(74) Representative: Henkel, Breuer & Partner

(57) **Abstract**

An apparatus for a plurality of clients to access a plant asset manager, the apparatus comprising a gateway server configured to communicate directly with a plant asset management server of the plant asset manager; and at least one client server configured to communicate directly with the gateway server and to communicate directly with at least one of the plurality of clients; such that there is no direct communication between the plurality of clients and the plant asset management server.

## Description

### Field of the Invention

The invention relates to an apparatus for a plurality of clients to access a plant asset manager of an industrial plant and particularly, though not exclusively, relates to an apparatus for remote access to the plant asset manager.

### Background

The purpose of a plant asset management (PAM) system is to allow operations and maintenance staff of an industrial plant to monitor assets of the plant, so as to safely increase total production output and reduce cost where possible. The PAM typically comprises a plant asset manager having a PAM server that interfaces with the plant assets such as devices and pieces of equipment through a fieldbus communication server.

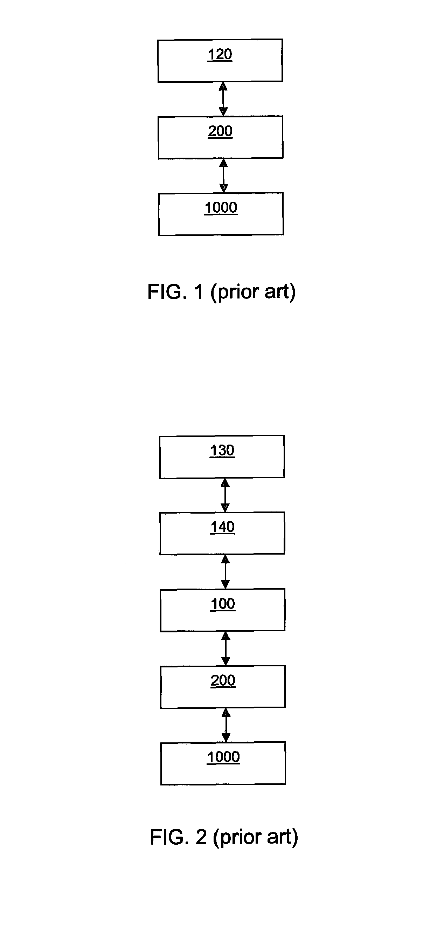

In current systems, as shown in FIG. 1 (prior art), a PAM client 120 must be connected to a PAM server 100 first before it can be connected to a 200 fieldbus communication (FBCOMM) server 200. The FBCOMM server 200 serves as an interface between the PAM server 100 and actual devices in the industrial plant 1000. The PAM client 120 may be desktop-based, such as a stationary computer, having application programming interfaces (API) provided therein for interacting with the PAM server 100. However, APIs provided on a desk-top based PAM client 120 are not available on mobile devices which thus cannot interact with PAM servers 100.

Alternatively, as shown in FIG. 2 (prior art), the PAM server 100 may be accessed via a web-based PAM client 130 through a web server 140 configured to translate HTTP messages from the web-based PAM client 130 into API calls to the PAM server 100. However, web-based PAM clients 130 cannot handle high load requirements due to a lack of scaling mechanisms, and are also unable to push notifications from the PAM server 100 to the web-based PAM client 130.

### Summary of the Invention

According to a first exemplary aspect, there is provided an apparatus for a plurality of clients to access a plant asset manager, the apparatus comprising a gateway server configured to communicate directly with a plant asset management server of the plant asset manager; and at least one client server configured to communicate directly with the gateway server and to communicate directly with at least one of the plurality of clients; such that there is no direct communication between the plurality of clients and the plant asset management server.

Each client server may be configured to manage individual client sessions.

Communications between the at least one client server and the at least one of the plurality of clients may comprise messages having a format of a predetermined protocol that are transmitted via a bidirectional transport protocol.

The gateway server may comprise a number of workers, each worker comprising a server application.

The number of workers may be selected based on processing needs depending on the number of the plurality of clients to be supported.

The gateway server may further comprise a load balancer for distributing workload to the number of workers.

The gateway server may be configured to interpret and execute commands received from the at least one client server.

The gateway server may be further configured to compose replies of results obtained from the plant asset management server in response to execution of the commands and to communicate the replies to the at least one client server.

The apparatus may further comprise a web server configured to transmit communications between web-based clients and a client server.

### Brief Description of the Drawings

In order that the invention may be fully understood and readily put into practical effect there shall now be described by way of non-limitative example only exemplary embodiments of the present invention, the description being with reference to the accompanying illustrative drawings.

In the drawings:
FIG. 1 (prior art) is an architectural diagram of a desk-top based PAM system;
FIG. 2 (prior art) is an architectural diagram of a web-based PAM system; and
FIG. 3 is an architectural diagram of the present invention in a PAM system.

### Detailed Description of the Exemplary Embodiments

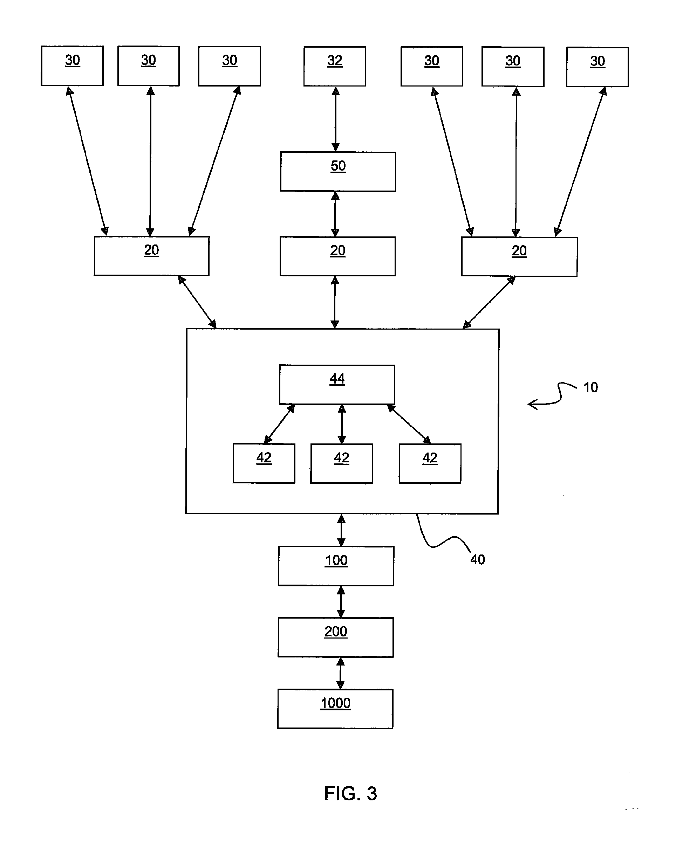

An exemplary apparatus 10 for a plurality of clients 30 to access a plant asset manager of an industrial plant 1000 will be described with reference to FIG. 3 below.

As shown in the architectural diagram of FIG. 3, the apparatus 10 comprises at least one client server 20 and a gateway server 40. Each client server 20 is configured to be connected with various PAM clients 30. Each client 30 may be in the form of a device such as a smartphone, tablet, desktop computer, or a web client 32. Each client server 20 manages individual client sessions and relays messages between a client 30 and a gateway server 40.

Transport of messages between a client 30 and a client server 20 is preferably via bidirectional transport protocol such as TCP, which may be wi-fi, 3G, 4G and so on. The messages exchanged may have a format of any predetermined protocol that allows the client 30 to send commands to the client server 20, and also allows the client server 20 to send results and push alarms or notifications to the client 30. In a preferred embodiment, the predetermined protocol may be in the form of XML streams.

The gateway server 40 is configured to interpret commands received from the client server 20 as transmitted from the clients 30 to the client server 20 as client requests, and to execute the commands. The gateway server 40 interfaces with a PAM server 100 of a plant asset manager, so that the PAM server 100 never directly interfaces with any clients 30, 32. The PAM server 100 continues to communicate with a fieldbus communication server 200 that serves as an interface between the PAM server 100 and plant assets in the industrial plant 1000.

When results are obtained from the PAM server 100 after client requests have been executed, the gateway server 40 is configured to compose replies to be returned to the appropriate client 30 via the client server 20. The reply should have a format based on the predetermined protocol mentioned above for message transmission between the client 30 and the client server 20.

As execution of client requests may require heavy processing, the gateway server 40 is preferably configured to be scalable. This may be achieved by configuring the gateway server 40 to have a distributed computing architecture, the gateway server 40 being provided with a number of workers 42 to perform the processing. Each worker 42 is configured as a server application that can be provided in a single machine or across multiple machines. The number of workers 42 provided in the gateway server 40 can thus be selected to be based on processing needs depending on the number of clients 30 to be supported. In this way, high load requirements faced when supporting a multitude of clients 30 can be readily met by adding more workers 42 to the scalable gateway server 40.

A load balancer 44 is preferably also included in the gateway server 40 to distribute workload to the number of workers 42. The workload may be distributed in various ways, for example, in a round-robin manner for even distribution.

The apparatus 10 may further comprise a web server 50 to allow the PAM server 100 to handle web-based clients 32, by transmitting communications between web-based clients 32 and a client server 20 which in turns communicates with the gateway server 40. The web server 50 is configured to translate HTTP commands from a web-based client 32 into the predetermined protocol as described above and to transmit the translated commands to the client server 20. This is because web-based clients 32 such as a web browser can only issue and process HTTP commands such as POST and GET.

Alternatively, the predetermined protocol may be configured to be HTTP-based instead of the preferred XML streams mentioned above. Accordingly, all clients 30, 32 and client servers 20 will communicate via HTTP, thus rendering the web server 50 unnecessary since the client servers 20 will be able to accept HTTP commands and thus communicate directly with web-based clients 32 that can only issue HTTP commands.

With the apparatus 10, multiple clients 30, 32 of a plurality of types can access the plant PAM server 100. Clients 30, 32 comprising handheld mobile devices such as smartphones and tablets, desk-top computers, web-based clients and so on can thus all be supported, thereby allowing the plant 1000 to be monitored remotely, and also by many users at once since more client servers 20 and more workers 42 in the gateway server 40 can be added where needed.

Whilst there has been described in the foregoing description exemplary embodiments of the present invention, it will be understood by those skilled in the technology concerned that many variations in details of design, construction and/or operation may be made without departing from the present invention.

## Claims

1. An apparatus for a plurality of clients to access a plant asset manager, the apparatus comprising:
a gateway server configured to communicate directly with a plant asset management server of the plant asset manager; and
at least one client server configured to communicate directly with the gateway server and to communicate directly with at least one of the plurality of clients;
such that there is no direct communication between the plurality of clients and the plant asset management server.

2. The apparatus of claim 1, wherein each client server is configured to manage individual client sessions.

3. The apparatus of claim 1, wherein communications between the at least one client server and the at least one of the plurality of clients comprise messages having a format of a predetermined protocol that are transmitted via a bidirectional transport protocol.

4. The apparatus of claim 1, wherein the gateway server comprises a number of workers, each worker comprising a server application.

5. The apparatus of claim 4, wherein the number of workers is selected based on processing needs depending on the number of the plurality of clients to be supported.

6. The apparatus of claim 4, wherein the gateway server further comprises a load balancer for distributing workload to the number of workers.

7. The apparatus of claim 1, wherein the gateway server is configured to interpret and execute commands received from the at least one client server.

8. The apparatus of claim 5, wherein the gateway server is further configured to compose replies of results obtained from the plant asset management server in response to execution of the commands and to communicate the replies to the at least one client server.

9. The apparatus of claim 1, further comprising a web server configured to transmit communications between web-based clients and a client server.
